**Europäisches Patentamt**

**European Patent Office**

**Office européen des brevets**

(19)

(11) Veröffentlichungsnummer: **0 040 775**
**A1**

(12)

# EUROPÄISCHE PATENTANMELDUNG

(21) Anmeldenummer: **81103763.9**

(22) Anmeldetag: **16.05.81**

(51) Int. Cl.³: **A 22 C 11/00**

(30) Priorität: **20.05.80 DE 8013550 U**

(43) Veröffentlichungstag der Anmeldung: **02.12.81**
**Patentblatt 81/48**

(84) Benannte Vertragsstaaten: **AT BE FR GB LU NL SE**

(71) Anmelder: **Schnell, Karl, Mühlstrasse 28,**
**D-7065 Winterbach (DE)**

(72) Erfinder: **Schnell, Karl, Mühlstrasse 28,**
**D-7065 Winterbach (DE)**

(74) Vertreter: **Schmid, Berthold, Patentanwälte Dipl.-Ing. B.**
**Schmid Dr. Ing. G. Birn Falbenhennenstrasse 17,**
**D-7000 Stuttgart 1 (DE)**

(54) **Füllrohr, insbesondere für Wurstbrät.**

(57) Beheizbares Füllrohr (1) für eine Abfüllmaschine, insbesondere für Wurstbrät, wobei eine elektrische Heizwendel oder ein flüssiges oder gasförmiges Medium in Verbindung mit dem doppelwandigen Füllrohr ist.

- 2 -

13 813   B/sw


Karl   S c h n e l l

7065 Winterbach


Füllrohr, insbesondere für Wurstbrät

_____


Die Erfindung bezieht sich auf ein Füllrohr für eine
Abfüllmaschine, insbesondere für Wurstbrät. Derartige
Füllrohre gibt es in den verschiedensten Ausführungen
und sie können feststehend oder auch um ihre Längsachse
drehbar sein. In der Regel bestehen sie weitgehend aus
einem hohlzylindrischen Rohr, das an seinem Einlaßende
trichterartig erweitert und gegebenenfalls mit einem
Befestigungsflansch versehen sein kann. Die lichte Weite
und damit im wesentlichen auch der Außendurchmesser des
zylindrischen Füllrohrteils richtet sich im wesentlichen
nach dem Durchmesser der zu füllenden Hülle, also beispielsweise eines Kunst- oder Naturdarms, und ihre Länge
wird durch die handelsübliche Länge des gerafften Darms
od. dgl. bestimmt. Infolgedessen muß beim Herstellen
besonders dünner und langer Würste ein vergleichsweise
enges Füllrohr verwendet werden. Gewisse Füllmedien,
insbesondere das Wurstbrät für Hartwürste wie Salami u.
dgl., finden nun in einem derart engen Füllrohr einen
erheblichen Gleitwiderstand vor, und infolgedessen bereitet
ihre Herstellung erhebliche Schwierigkeiten. Vor allen
Dingen sind allein aufgrund dieses Innenwiderstands des
Füllrohrs der Füllgeschwindigkeit und damit der pro Zeiteinheit herzustellenden Würste erhebliche Grenzen gesetzt.

Die Aufgabe der Erfindung besteht infolgedessen darin,
ein Füllrohr für eine Abfüllmaschine, insbesondere für
Wurstbrät, zu schaffen, dessen Innenwiderstand geringer ist
als der eines vergleichbar dimensionierten vorbekannten
Füllrohrs.

Zur Lösung dieser Aufgabe wird erfindungsgemäß vorgeschlagen,
daß das Füllrohr gemäß dem Oberbegriff des Anspruchs 1 entsprechend dem kennzeichnenden Teil dieses Anspruchs ausgebildet ist.
Aufgrund der beheizbaren Ausführung des Füllrohres erwärmt sich das durchströmende Füllmedium, und dies führt zwangsläufig zu einer Reduzierung seines Reibungswiderstandes an der Innenwandung des Füllrohrs. Insbesondere wenn das Füllgut Fett in irgendeiner Form enthält, erweicht oder schmilzt das Fett des unmittelbar an der Innenwandung liegenden Füllgutteils, so daß ein regelrechter Schmierfilm entsteht. Damit läßt sich auch grobes Wurstbrät, wie es für Salami u. dgl. benötigt wird, mit hoher Geschwindigkeit durch das Füllrohr drücken, und auf diese Weise kann man die Füllgeschwindigkeit einer mit einem derartigen Füllrohr ausgestatteten Füllmaschine ganz erheblich steigern. Das Füllrohr ist zweckmäßigerweise mit einer Beheizeinrichtung versehen oder wenigstens teilweise als solche ausgebildet. Um den Vorteil dieser Erfindung voll ausnutzen zu können, wird man vorteilhafterweise den zylindrischen Teil des Füllrohrs möglichst weitgehend für die Beheizung heranziehen.

Das Füllrohr ist in Weiterbildung der Erfindung mit mindestens einer elektrischen Heizwendel od. dgl. umgeben. Diese muß einerseits genügend stark sein, um das Füllrohr rasch erwärmen zu können, und andererseits gegen Beschädigung, Feuchtigkeit u. dgl. gut geschützt sein.

Eine andere Variante der Erfindung sieht vor, daß das
Füllrohr doppelwandig ausgebildet und als Kammer für ein
flüssiges oder gasförmiges Medium ausgebildet sowie
mit je einem Ein- und Austrittstutzen od. dgl. versehen
ist. Diese Ausführung bietet sich eher für ein stillstehendes Füllrohr an und auch nur dort, wo entsprechende
Medien bereits zur Verfügung stehen.

Wo letzteres nicht der Fall ist, wird eine weitere Ausführungsform der Erfindung vorgeschlagen, welche dadurch
gekennzeichnet ist, daß das Füllrohr aus je einem elektrisch leitenden Innen- und Außenrohr besteht, die an
einem Ende, insbesondere am Austrittsende, für das Füllgut elektrisch leitend miteinander verbunden sind und
an ihrem gegenüberliegenden Ende je ein elektrisches
Anschlußelement für die Zuführung bzw. Ableitung des
elektrischen Stroms aufweisen. Elektrischer Strom steht
bei Abfüllmaschinen ohnehin immer zur Verfügung, weswegen
das elektrische Beheizen keine Probleme aufwirft. Um
jedoch die elektrische Sicherheit zu gewährleisten, verwendet man zweckmäßigerweise eine sehr geringe Spannung,
beispielsweise von 1 V oder wenig darüber, und um die
notwendige Leistung zu erzielen, eine relativ große

Stromstärke von beispielsweise 400-500 A. Ein besonderer
Vorteil der elektrischen Beheizeinrichtung liegt in ihrer
kurzen Ansprechzeit und einfachen Bauweise. Die Stromzuführung ist vorteilhafterweise am Innenrohr und die
Ableitung am Außenrohr angebracht. Wenn sich beide an
dem vom Austrittsende abgewandten Rohrende befinden, so
muß der elektrische Strom zunächst entlang dem gesamten
Innen- und nachfolgend entlang dem Außenrohr fließen.
Das Füllrohr, insbesondere aber das Innenrohr, bildet
dabei einen elektrischen Widerstand, der sich beim Stromdurchfluß erwärmt.

Eine weitere Ausgestaltung der Erfindung sieht vor, daß
sich zwischen dem Innen- und Außenrohr eine elektrische
Isolationsschicht, insbesondere aus Kunststoff, befindet,
welche ein Durchschlagen des Stroms in radialer Richtung
verhindert.

Aus verschiedenen Gründen, nicht zuletzt um eine Beeinträchtigung des auf dem Füllrohr befindlichen gerafften
Darms od. dgl. zu verhindern, wird gemäß einer weiteren
Variante der Erfindung vorgeschlagen, daß die Querschnittsfläche des Innenrohres wesentlich geringer ist als diejenige des Außenrohres, insbesondere die Wandstärke des Außenrohres etwa das drei- bis sechs-fache der Wandstärke des Innenrohres beträgt. Damit stellt das Innenrohr einen erheblich größeren elektrischen Widerstand dar als das Außenrohr, und dies führt dazu, daß sich das Innenrohr weit stärker erwärmt als das Außenrohr. Wenn man den Strom intermittierend durch das Füllrohr leitet, beispielsweise immer nur dann, wenn die absatzweise arbeitende Füllmaschine läuft, so kann man eine Erwärmung des Außenrohres nahezu vollständig vermeiden. Andererseits erwärmt sich aber das Innenrohr relativ schlagartig, weswegen man auf eine Dauerbeheizung verzichten kann.

Gemäß einer anderen Ausbildung der Erfindung wird vorgeschlagen, daß das Innenrohr aus nichtrostendem Material, insbesondere V2A-Stahl, das Außenrohr aus elektrisch gut leitendem Material, vorzugsweise aus Kupfer oder Messing besteht und das Außenrohr von einem Schutzrohr umgeben ist, das vorzugsweise aus V2A-Stahl od. dgl. hergestellt ist. Kupfer oder Messing sind zwar gute Wärmeleiter, jedoch aus hygienischen Gründen in der Lebensmittelindustrie, insbesondere bei der Fleischverarbeitung, nicht gerne gesehen, weil sie nicht lebensmittelecht sind. Anders ist das bei V2A oder anderem nichtrostendem Stahl, weswegen das mit einem V2A-Schutzrohr ausgestattete Füllrohr auch die hygienischen Anforderungen in dem genannten Bereich erfüllt.

In der Zeichnung ist ein Ausführungsbeispiel der Erfindung dargestellt. Es zeigen:

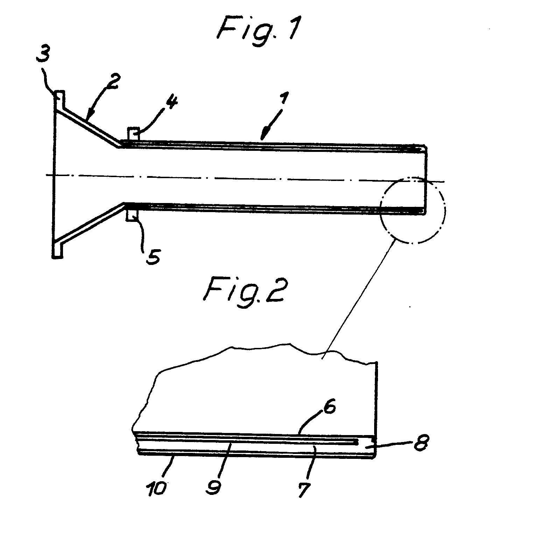

Figur 1      einen Längsmittelschnitt durch das Füllrohr,

Figur 2      in vergrößertem Maßstab einen Ausschnitt aus dem in Fig. 1 gekennzeichneten Endbereich.

Das Füllrohr weist vorzugsweise einen zylindrischen Füllrohrteil 1 und einen konischen Füllrohrteil 2 auf, an dem ein Befestigungsflansch 3 angeformt sein kann. Außerdem sind noch zwei Anschlußelemente 4 und 5 vorgesehen, die bei einem beheizbaren Füllrohr mit je einem elektrischen Draht verbunden werden. Bei einem flüssigen Wärmeträger kann es sich auch um Anschlußstutzen für die Zu- und Ableitung dieses Heizmediums handeln.

Beim Ausführungsbeispiel handelt es sich um ein elektrisch beheizbares Füllrohr. Sein zylindrischer Füllrohrteil 1

- 8 -

wird durch ein Innenrohr 6 und ein Außenrohr 7 gebildet.
Sie sind am Ausströmende 8 des Füllrohrs elektrisch
leitend miteinander verbunden. Zwischen dem Außen- und
dem Innenrohr befindet sich eine Isolationsschicht 9.
Mit dem Innenrohr 6 ist beispielsweise das Anschlußelement
4 und mit dem Außenrohr 7 das Anschlußelement 5 elektrisch
leitend verbunden. Demnach fließt also der Strom vom
Anschlußelement 4 über das Innenrohr 6, das Ausströmende 8
und das Außenrohr 7 zum Anschlußelement 5. Dabei bildet
das Innenrohr selbst einen elektrischen Widerstand, der
sich beim Stromdurchfluß rasch und relativ stark erwärmt.
Auch das Außenrohr 7 stellt einen elektrischen Widerstand
dar, jedoch ist sein Querschnitt um ein Vielfaches größer,
so daß es sich nicht oder nur sehr unwesentlich erwärmt.
Dazu trägt auch bei, daß man das Außenrohr im Gegensatz zum
Innenrohr aus einem elektrisch gut leitenden Material,
insbesondere Kupfer oder Messing, herstellt. Weil diese
Materialien nicht lebensmittelecht sind, umgibt man das
Außenrohr 9 noch mit einem Schutzrohr 10, welches vorteilhafterweise ebenso wie das Innenrohr 6 aus V2A-Stahl hergestellt ist.

- 9 -

- 9 -

Ansprüche

1.   Füllrohr für eine Abfüllmaschine, insbesondere für
Wurstbrät, gekennzeichnet durch eine Ausbildung als
beheizbares Füllrohr.

2.   Füllrohr nach Anspruch 1, dadurch gekennzeichnet,
daß das Füllrohr mit einer Beheizeinrichtung (10) versehen
oder wenigstens teilweise als solche ausgebildet ist.

3.   Füllrohr nach Anspruch 1 oder 2, dadurch gekennzeichnet, daß das Füllrohr mit mindestens einer elektrischen Heizwendel od. dgl. umgeben ist.

4.   Füllrohr nach Anspruch 1 oder 2, dadurch gekennzeichnet,
daß das Füllrohr doppelwandig ausgeführt und als Kammer
für ein flüssiges oder gasförmiges Medium ausgebildet
sowie mit je einem Ein- und Austrittstutzen (4, 5) od. dgl.
versehen ist.

5.   Füllrohr nach Anspruch 1 oder 2, dadurch gekennzeichnet,
daß das Füllrohr aus je einem elektrisch leitenden Innen-(6)
und Außenrohr (7) besteht, die an einem Ende, insbesondere

- 10 -

am Austrittsende (8) für das Füllgut elektrisch leitend
miteinander verbunden sind und etwa an ihrem gegenüberliegenden Ende je ein elektrisches Anschlußelement (4, 5)
für die Zuführung bzw. Ableitung des elektrischen Stroms
aufweisen.

6.   Füllrohr nach Anspruch 5, dadurch gekennzeichnet,
daß sich zwischen dem Innen-(6) und Außenrohr (7) eine
elektrische Isolationsschicht (9), insbesondere aus Kunststoff, befindet.

7.   Füllrohr nach Anspruch 5 oder 6, dadurch gekennzeichnet, daß die Querschnittsfläche des Innenrohres (6)
wesentlich geringer ist als diejenige des Außenrohres (7),
insbesondere die Wandstärke des Außenrohres etwa das
drei- bis sechs-fache der Wandstärke des Innenrohres
beträgt.

8.   Füllrohr nach einem oder mehreren der Ansprüche 5
bis 7, dadurch gekennzeichnet, daß das Innenrohr (6) aus
nichtrostendem Material, insbesondere V2A-Stahl, das
Außenrohr (7) aus elektrisch gut leitendem Material, vorzugsweise aus Kupfer oder Messing besteht, und das Außenrohr von einem Schutzrohr (10) umgeben ist, das vorzugsweise aus V2A-Stahl od. dgl. hergestellt ist.

*Fig. 1*

*Fig. 2*

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 182 211 (PADDOCK) <br> * Insgesamt * <br><br> -- | 1-4 |
| X | GB - A - 935 365 (HILGELAND) <br> * Insgesamt * <br><br> -- | 1-4 |
| X | US - A - 2 953 461 (PROHASKA) <br> * Spalte 2, Zeilen 45-58 * <br><br> -- | 1-3 |
| | US - A - 2 860 991 (CHRISTIANSON) <br> * Spalte 4, Zeilen 1-14 * <br><br> -- | 1,2,4 |
| | US - A - 3 005 716 (MORELAND) <br> * Spalte 2, Zeilen 48-59; <br> Spalte 3, Zeilen 37-40 * <br><br> -- | 1-3 |
| | US - A - 3 889 013 (MOULE) <br> * Spalte 3, Zeilen 32-44 * <br><br> -- | 1,2,4 |
| | GB - A - 1 145 515 (ATLAS-MAK) <br> * Anspruch 1 * <br><br> -- | 1 |
| P | EP - A - 0 015 622 (NIEDECKER) <br> * Seite 9, Zeile 18 - Seite 10, <br> Zeile 5 * <br><br> -- | 1,2,4 |

**KLASSIFIKATION DER ANMELDUNG (Int. Cl.³)**

A 22 C 11/00

**RECHERCHIERTE SACHGEBIETE (Int. Cl.³)**

A 22 C

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-08-1981 | DE LAMEILLEURE |

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | CH - A - 278 923 (BRAUNSCHWEIGER GESELLSCHAFT FÜR ANGEWANDTE ELEK- TRIZITÄT) <br> * Seite 4; Zeilen 15-47 * <br> -- | 1 | |
| A | US - A - 2 881 694 (BARNES) <br> * Insgesamt * <br> ---- | 1 | |

RECHERCHIERTE SACHGEBIETE (Int. Cl. 3)